# EUROPEAN PATENT APPLICATION

(11) **EP 1 921 814 A1**
(43) Date of publication of application: **14.05.2008**
(21) Application number: 07020508.3
(22) Date of filing: 19.10.2007
(51) Int. Cl.: H04L 12/58

(54) **Communication device for sending emails**

(30) Priority: 08.11.2006 JP 2006302851; 14.02.2007 JP 2007033300
(71) Applicant: Murata Machinery, Ltd., Kyoto-shi, Kyoto 6018326 (JP)
(72) Inventor: Tomita, Hisanori, Kyoto-shi Kyoto 612-8686 (JP)
(74) Representative: Schoppe, Fritz

(57) **Abstract**

A communication device (1) is capable of transmitting e-mails directly to a destination IP address (33) in a format complying with the RFC2822. A direct SMTP transmission function of e-mails and a usual transmission function via a mail server (31,32) are provided. In a direct SMTP transmission, an alternative e-mail address (D23) registered in advance for every transmission IP address is provided to a "RCPT TO" command of an e-mail transmission protocol. In a via-server transmission, a transmission mail server (31,32) is registered individually for every destination e-mail address. Furthermore, a transmission mail server (31,32) for the entire apparatus can also be registered, and whether to transmit via the entire mail server (31) or to transmit via the individual mail server (32) is registered in advance for every e-mail address of the destination.

## Description

### CROSS-REFERENCE TO RELATED APPLICATIONS

This application claims priority to Japanese Patent Application Nos. 2006-302851, filed on November 8, 2006, and No. 2007-033300, filed on February 14, 2007, which applications are hereby incorporated by reference in their entirety.

### BACKGROUND OF THE INVENTION

### 1. Field of the Invention

The present invention relates to a communication device having an e-mail transmitting function. The communication device according to the present invention can be applied to an Internet facsimile device and the like having an e-mail transmitting and receiving function.

### 2. Description of Related Art

Recently, a so-called direct SMTP (Simple Mail Transfer Protocol) transmission is being used between communication devices (e.g., Internet facsimile devices and the like) having the SMTP function, where e-mails are transmitted directly from a communication device on a transmission side to a communication device on a reception side without passing through a mail server.

In such direct SMTP transmission, an IP address of the destination is specified as an address of the destination (communication device on reception side). That is, the IP address is described in the "RCPT TO" command in the SMTP protocol.

However, describing the IP address to the "RCPT TO" command is not a format that complies with the RFC2822, and is not preferable in terms of ensuring compatibility and the like.

It is defined in the RFC2821 that a forward-path must be used as an argument of the RCPT command, and it is defined in the RFC2822 that an e-mail address must be used as the forward-path regarding the describing format of the forward-path. Thus, the format of using the IP address for the argument of the "RCPT TO" command does not comply with the RFC2822.

### SUMMARY OF THE INVENTION

In order to overcome the problems described above, preferred embodiments of the present invention provide a communication device that complies with the RFC2822 even when directly transmitting e-mails to a destination IP address.

According to a preferred embodiment of the present invention, a communication device includes a storage unit arranged to store a destination IP address and an alternative e-mail address; and a transmission processing section arranged to transmit an e-mail to the destination IP address stored in the storage unit; wherein the transmission processing section provides the alternative e-mail address to an "RCPT TO" command of an e-mail transmission protocol when transmitting an e-mail.

In a preferred embodiment of the present invention, a communication device includes a storage unit arranged to store a destination IP address and an alternative e-mail address destination used in a direct transmission, and to further store an e-mail address and mail server specifying information specifying a server IP address used in a via-server transmission; a first transmission processing section arranged to transmit an e-mail to the destination IP address when the direct transmission is selected; an IP address specification processing section arranged to specify the server IP address based on the mail server specifying information when a via-server transmission is selected; and a second transmission processing section arranged to transmit an e-mail to the server IP address specified by the IP address specification processing section; wherein the first transmission processing section provides the alternative e-mail address to an "RCPT TO" command of an e-mail transmission protocol when transmitting an e-mail.

Furthermore, in a preferred embodiment of the present invention, if a mail server IP address provided to a mail server is contained in the mail server specifying information, the IP address specification processing section specifies the server IP address for transmission.

Moreover, in a preferred embodiment of the present invention, if a domain name provided to a mail server is contained in the mail server specifying information, the IP address specification processing section performs a search process on a predetermined search server based on the domain name and specifies a server IP address.

In a preferred embodiment of the present invention, if a server IP address and a domain name provided to a mail server are not contained in the server specifying information, the IP address specification processing section performs a search process on a predetermined search server based on a host name in an e-mail address of a destination of the e-mail and specifies a server IP address.

In a preferred embodiment of the present invention, the server specifying information is registered individually for every destination e-mail address; and the IP address specification processing section selects the mail server specifying information to be referenced according to an e-mail address of a destination of the e-mail to be transmitted.

According to a preferred embodiment of the present invention, the e-mails can be transmitted in a format complying with the RFC2822 due to the configuration of providing an alternative e-mail address to the "RCPT TO" command of the e-mail protocol when transmitting the e-mails directly to the destination IP address without via the mail server.

Various needs of the user can be responded to and satisfied since direct transmission in which e-mails are not transmitted via the mail server and via-server transmission in which e-mails are transmitted via the mail server can be selected.

According to a preferred embodiment of the present invention, if the server IP address provided to the mail server is contained in the server specifying information, a search server or the like does not need to be used by using the relevant IP address.

Cases where the mail server is specified in domain name format can also be utilized, and thus is convenient.

The user does not need to register the IP address or the domain name of the mail server in advance since the IP address of the mail server is specified based on the host name in the destination mail address, and thus is convenient.

Moreover, the needs of the user can be flexibly responded to and satisfied since the mail server to be used is registered for every destination e-mail address.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a configuration of a facsimile multifunctional peripheral serving as a communication device according to a preferred embodiment of the present invention.

Fig. 2 is a view illustrating storage content stored in a storage unit.

Fig. 3 is a flowchart illustrating processing operations of a control unit.

### DETAILED DESCRIPTION OF PREFERRED EMBODIMENTS

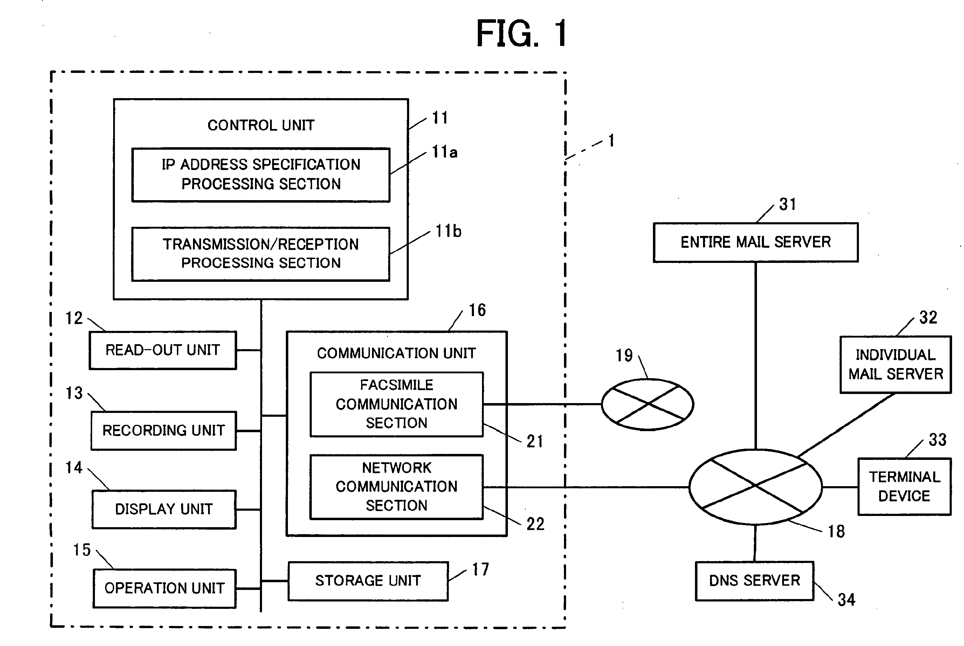

Fig. 1 is a block diagram illustrating a configuration of a facsimile multifunctional peripheral 1 serving as a communication device according to a preferred embodiment of the present invention. As illustrated in Fig. 1, the facsimile multifunctional peripheral 1 includes a control unit 11, a read-out unit 12, a recording unit 13, a display unit 14, an operation unit 15, a communication unit 16, and a storage unit 17. The functions of the facsimile multifunctional peripheral 1 include facsimile function, copy function, scanner function, printer function, and Internet facsimile function.

The control unit 11 is responsible for the control of the facsimile multifunctional peripheral 1, and preferably includes a CPU and the like. An IP address specification processing section 11a and a transmission/reception processing section (first and second transmission processing sections) 11b are arranged in the control unit 11 as functional elements. The role of the processing sections 11a, 11b will be hereinafter described in detail.

The read-out unit 12 reads the document. The read-out unit 12 is used to read the document when transmitting a facsimile, to read the document when using the scanner function, and the like. The recording unit 13 preferably includes a printer device, etc., and is used to print image data on a recording paper and the like.

The display unit 14 preferably includes a liquid crystal display device, etc., and is used to display operation information, etc., of the facsimile multifunctional peripheral 1. The operation unit 15 preferably includes a plurality of operation buttons and a touch panel, and is used in the operation of the facsimile multifunctional peripheral 1.

The communication unit 16 serves as a communication interface of the facsimile multifunctional peripheral 1. A facsimile communication section 21 and a network communication section 22 are arranged in the communication unit 16. The facsimile communication unit 21 performs transmission and reception of facsimile via a telephone line network 19. The network communication section 22 performs data communication via a network 18 including LAN (Local Area Network) and Internet.

More specifically, an NCU (Network Control Unit), a modem, and the like are arranged in the facsimile communication section 21. The network communication function 22 has a function of handling SMTP, POP (Post Office Protocol), SMB (Server Message Block), HTTP (HyperText Transfer Protocol) and the like. Specific functions of the network communication section 22 include transmission and reception of e-mails, Internet facsimile communication of attaching image data to the e-mail and transmitting or receiving the same, and transmission and reception of data via the LAN or the Internet.

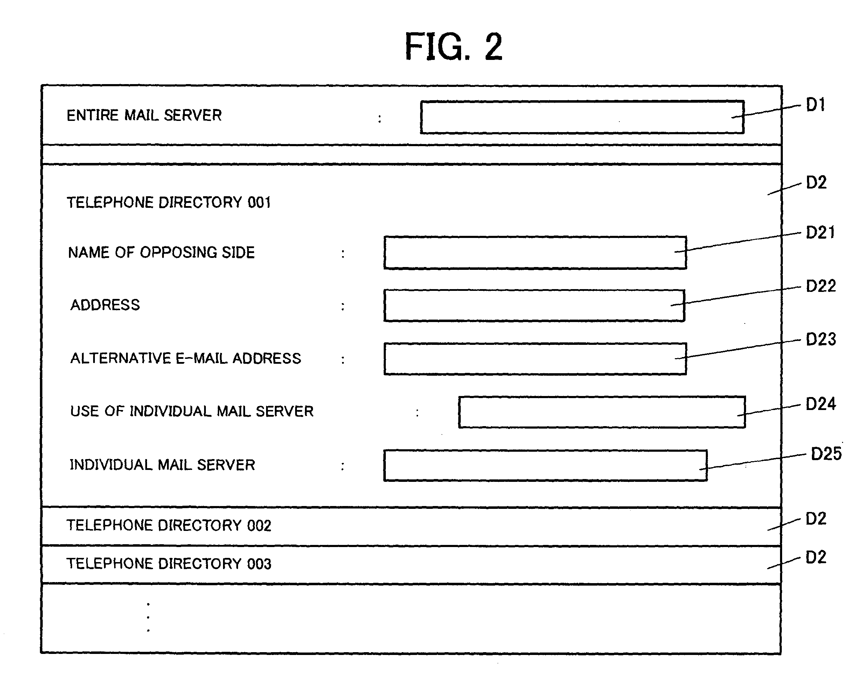

The storage unit 17 preferably includes a storage device such as semiconductor memory and hard disc device. The storage content of the storage unit 17 include transmitted and received data of the facsimile transmitted and received via the facsimile multifunctional peripheral 1, transmitted and received data of the Internet facsimile, transmitted and received data of e-mail, image data read when using the scanner function, data related to setting and maintenance management of the facsimile multifunctional peripheral 1, and the like. More specific content of the storage content will be hereinafter described based on Fig. 2.

The facsimile multifunctional peripheral 1 configured as above can communicate with an entire mail server 31, an individual mail server 32, a terminal device 33, a DNS (Domain Name Server) server 34, and the like via the network 18.

The entire mail server 31 and the individual mail server 32 are mail servers for transmission and for reception of e-mails, and the specific role thereof will be described later. The terminal device 33 has a SMTP communication function, and thus can transmit or receive e-mails directly with the facsimile multifunctional peripheral 1 via the network 18. The DNS server 34 is provided to search for the IP address of the individual mail server 32 with a given domain name based on the domain name, and which DNS server 34 to access is registered in the facsimile multifunctional peripheral 1 in advance.

The facsimile multifunctional peripheral 1 is provided with a function of directly transmitting and receiving e-mails (or Internet facsimile) with the terminal device 33 having the SMTP communication function, and a function of transmitting and receiving e-mails (or Internet facsimile) through normal mail servers 31, 32. Furthermore, when transmitting e-mails through the mail servers, the transmission mail server 32 is registered individually for every e-mail address of the destination. The transmission mail server 31 for the entire apparatus 1 can also be registered, and whether to transmit through the entire mail server 31 or to transmit through the individual mail server 32 is registered in advance for every e-mail address of the destination.

The registration of the entire mail server 31 and the individual mail server 32 is performed in IP address format or in domain name format. When registered in the domain name format, a search process is performed on the DNS server 34 based on the relevant domain name, and the IP address of the mail server 31, 32 to be used is specified.

When transmission through the individual mail server 32 is selected, the search process is performed on the DNS server 34 based on a host name (domain name in the present preferred embodiment) in the e-mail address of the destination of the e-mail if the individual mail server 32 is not registered, and the IP address of the individual server 32 to be used is specified.

Furthermore, when the direct SMTP transmission is performed, an alternative e-mail address registered in advance for every destination IP address is provided to the "RCPT TO" command of the e-mail protocol (SMTP) to comply with the RFC2822.

In correspondence to such functions, server specifying information (IP address or domain name) D1 for specifying the entire mail server 31 is registered in advance and telephone directory information D2 set for each opposing side is registered in advance in the storage unit 17, as illustrated in Fig. 2. Each telephone directory information D2 is registered with identifying information (e.g., name, representation name, etc.) D21 related to the name of the opposing side, address information D22, alternative e-mail address information D23, server usage information D24 related to necessity of use of the individual mail server 32, and server specifying information (IP address or domain name) D25 for specifying the individual mail server 32.

The address of the destination of the e-mail is registered in the address information D22, where the destination IP address is registered when performing direct SMTP transmission (hereinafter referred to as "direct transmission"), and the destination e-mail address is registered when performing transmission through the transmission mail server (hereinafter referred to as "via-server transmission"). The alternative e-mail address to be provided to the "RCPT TO" command of the e-mail protocol (SMTP) in direct SMTP transmission is registered in the alternative e-mail address information D23.

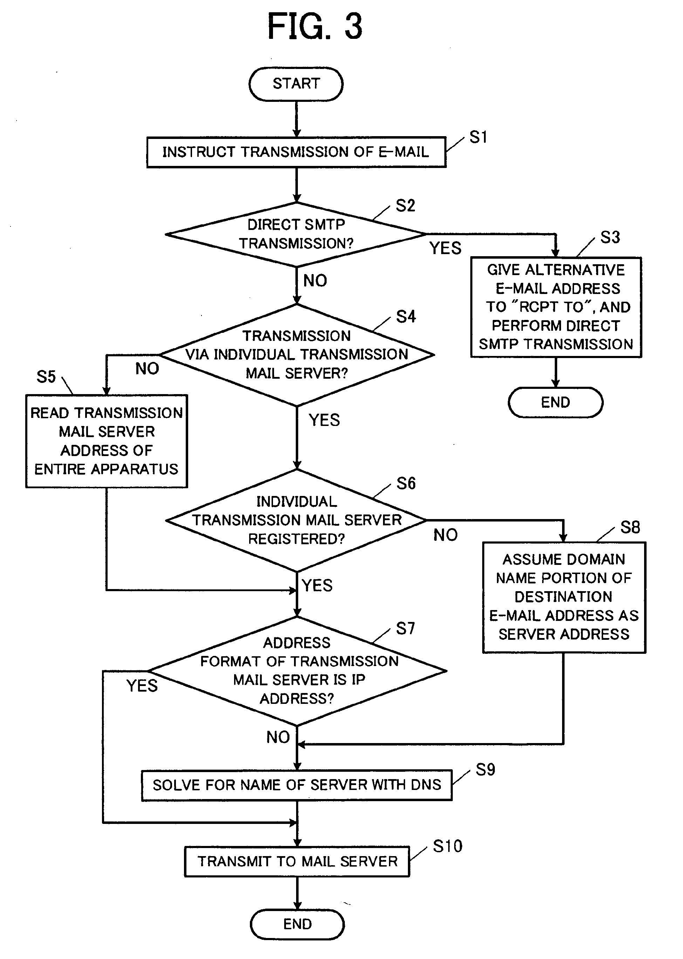

The processing operations and the roles of the IP address specification processing section 11a and the transmission/reception processing section 11b of the control unit 11 will now be described with reference to Fig. 3. Briefly, the IP address specification processing section 11a assumes the role related to the process of specifying the IP address of the transmission mail servers 31, 32 in via-mail server transmission. The transmission/reception processing section 11b assumes the role related to processing of transmitting and receiving e-mails with the mail servers 31, 32 or with the terminal device 33.

As illustrated in Fig. 3, when an instruction to transmit the e-mail is input through the operation unit 15, etc., in step S1, a determination as to whether to transmit the relevant e-mail in direct transmission or in via-server transmission is made by the transmission/reception processing section 11b in step S2. A determination of direct transmission is made if the IP address is set in the destination address of the e-mail, and a determination of via-server transmission is made if the e-mail address is set in the destination address.

When direct transmission is selected, the e-mail is transmitted to the IP address of the opposing side by the transmission/reception processing section 11b in step S3. In such transmission process, the alternative e-mail address corresponding to the destination IP address is read from the corresponding telephone directory information D2, and provided to the "RCPT TO" command of the e-mail protocol (SMTP).

On the other hand, when the via-server transmission is selected, the IP address specifying process of the mail server 31, 32 to be used is performed by the IP address specification processing section 11a (step S4 to S9).

In step S4, a determination is made as to whether the transmission is the transmission using the entire mail server 31 or the transmission using the individual mail server 32 based on the set state of the server usage information D24 in the telephone directory information D2.

In the case of transmission using the entire mail server 31, the server specifying information (IP address or domain name) D1 of the entire mail server 31 is read from the storage unit 17 in step S5, and the process proceeds to step S7. In the case of transmission using the individual mail server 32, a determination is made as to whether or not the server specifying information D25 related to the individual mail server 32 is registered in the telephone directory information D2 in step S6, where if such server specifying information D25 is registered, the relevant server specifying information D25 is read and the process proceeds to step S7, whereas if such server specifying information D25 is not registered, the process proceeds to step S8.

In step S7, a determination is made as to whether or not the server specifying information D1, D25 read in steps S5, S7 is the IP address, where if the server specifying information D1, D25 is the IP address, the IP address contained in the server specifying information D1, D25 is specified as the IP address of the transmission mail server to be used and the process proceeds to step S10, whereas if the server specifying information D1, D25 is not the IP address but is the domain name, the process proceeds to step S9.

In step S8, the domain name portion in the destination e-mail address is extracted as the server specifying information, and the process proceeds to step S9.

In step S9, the search process is performed on the DNS sever 34 registered in advance based on the domain name given as the server specifying information, the IP address of the mail server 31, 32 corresponding to such domain name is specified, and the process proceeds to step S10.

In step S10, the e-mail is transmitted to the IP address (mail server 31, 32) specified by the IP address specification processing section 11a by the transmission/reception processing section 11b.

Therefore, according to the present preferred embodiment, the alternative e-mail address corresponding to the destination IP address is read from the corresponding telephone directory information D2 and provided to the "RCPT TO" command of the e-mail protocol (SMTP) in time of direct transmission, and thus the e-mail can be transmitted in a format complying with the RFC2822.

Furthermore, various needs of the user can be responded to and satisfied since direct transmission and via-server transmission can be selected (registered in advance) for every destination of the e-mail.

The needs of the user can be flexibly responded to and satisfied since the mail server 32 to be used is registered for every destination e-mail address in the via-server transmission.

Moreover, if IP address is contained in the server specifying information D1, D25 related to the mail server 31, 32 used in the via-server transmission, a search server, etc., does not need to be used by using the relevant IP address.

Cases where specification is made in domain name format as the server specifying information D1, D25 can also be utilized, and thus is convenient.

The user does not need to register the IP address or the domain name of the individual mail server 32 in advance since the IP address of the individual mail server 32 is specified based on the domain name in the destination e-mail address, and thus is convenient.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. A communication device comprising:
a storage unit arranged to store a destination IP address and an alternative e-mail address; and
a transmission processing section arranged to transmit an e-mail to the destination IP address stored in the storage unit; wherein
the transmission processing section provides the alternative e-mail address to an "RCPT TO" command of an e-mail transmission protocol when transmitting an e-mail.

2. A communication device comprising:
a storage unit arranged to store a destination IP address and an alternative e-mail address destination used in a direct transmission, and to store an e-mail address and mail server specifying information specifying a mail server IP address used in a via-mail server transmission;
a first transmission processing section arranged to transmit an e-mail to the destination IP address when the direct transmission is selected;
an IP address specification processing section arranged to specify the mail server IP address based on the mail server specifying information when via-mail server transmission is selected; and
a second transmission processing section arranged to transmit an e-mail to the mail server IP address specified by the IP address specification processing section; wherein
the first transmission processing section provides the alternative e-mail address to an "RCPT TO" command of an e-mail transmission protocol when transmitting an e-mail.

3. The communication device according to claim 2, wherein when a mail server IP address provided to a mail server is contained in the mail server specifying information, the IP address specification processing section specifies the mail server IP address.

4. The communication device according to claim 2, wherein when a domain name provided to a mail server is contained in the mail server specifying information, the IP address specification processing section performs a search process on a predetermined search server based on the domain name and specifies a mail server IP address.

5. The communication device according to claim 2, wherein when a mail server IP address and a domain name provided to a mail server are not contained in the mail server specifying information, the IP address specification processing section performs a search process on a predetermined search server based on a host name in an e-mail address of a destination of the e-mail and specifies a mail server IP address.

6. The communication device according to claim 2, wherein the mail server specifying information is registered individually for every destination e-mail address, and the IP address specification processing section selects the mail server specifying information to be referenced according to an e-mail address of a destination of the e-mail to be transmitted.

7. The communication device according to claim 3, wherein the mail server specifying information is registered individually for every destination e-mail address, and the IP address specification processing section selects the mail server specifying information to be referenced according to an e-mail address of a destination of the e-mail to be transmitted.

8. The communication device according to claim 4, wherein the mail server specifying information is registered individually for every destination e-mail address, and the IP address specification processing section selects the mail server specifying information to be referenced according to an e-mail address of a destination of the e-mail to be transmitted.

9. The communication device according to claim 5, wherein the mail server specifying information is registered individually for every destination e-mail address, and the IP address specification processing section selects the mail server specifying information to be referenced according to an e-mail address of a destination of the e-mail to be transmitted.
